# EUROPEAN PATENT APPLICATION

(11) **EP 2 145 672 A2**
(43) Date of publication of application: **20.01.2010**
(21) Application number: 09009164.6
(22) Date of filing: 14.07.2009
(51) Int. Cl.: B01D 53/94, F01N 3/08, B01J 23/63

(54) **NOx storage catalyst**

(30) Priority: 14.07.2008 JP 2008182993
(71) Applicant: Toyota Jidosha Kabushiki Kaisha, Toyota-shi, Aichi-ken 471-8571 (JP); Cataler Corporation, Shizuoka-ken 437-1492 (JP)
(72) Inventor: Endo, Takayuki, Toyota-shi Aichi-ken 471-8571 (JP)
(74) Representative: Kuhnen & Wacker

(57) **Abstract**

An oxide carrier, which is a component of a catalytic coat layer, contains 30 mass% or more of CeO₂, and the catalytic coat layer carries 0.3 mol or more of kalium per liter of a carrier base. A synergistic effect of CeO₂ and kalium is exhibited and the performance in storing NOx and SOx in a low-temperature region is improved.

## Description

### BACKGROUND OF THE INVENTION

### 1. Field of the Invention

The invention relates to a NOx storage catalyst that stores a greater amount of NOx and SOx that are discharged from an automobile engine, thereby reducing the amount of emission thereof.

### 2. Description of the Related Art

As the catalyst that reduces NOx contained in exhaust gas from a lean bum engine of an automobile, a lean NOx catalyst, a NOx storage-reduction catalyst, an NH₃ denitration catalyst, and a NOx selective reduction catalyst are available. Of these catalysts, the lean NOx catalyst is chiefly used in the exhaust gas from a diesel engine. The lean NOx catalyst reduces NOx with the aid of a reducing agent, such as light oil, that is added to the exhaust gas.

The NOx storage-reduction catalyst uses a NOx storage material, such as alkali metal and alkaline-earth metal, to store NOx in the NOx storage material in a lean atmosphere. Then, by making the atmosphere rich intermittently, the NOx discharged from the NOx storage material is reduced by the reducing component abundantly present in the atmosphere.

With regard to the NH₃ denitration catalyst, as described in Japanese Patent Application Publication No. 10-146528 (JP-A-10-146528), for example, urea water is added to the exhaust gas, and the thus-produced NH₃ is used to reduce NOx.

However, there is a problem that in the cases of the lean NOx catalyst and the NOx storage-reduction catalyst, it is difficult to reduce NOx in a low-temperature region below approximately 250°C at which the carried noble metal, such as Pt, is activated, and NOx is discharged unchanged. Also in the case of the NH₃ denitration catalyst, because the temperature at which NH₃ and NOx react with each other is originally high, activation temperature is lowered by using noble metal, such as Pt, in combination, Also in this case, however, it is difficult to reduce NOx until the temperature reaches the activation temperature at which noble metal is activated as in the case of the lean NOx catalyst or the NOx storage-reduction catalyst.

In Japanese Patent Application Publication No. 2000-230414 (JP-A-2000-230414), it is proposed to dispose a NOx adsorbing material upstream, with respect to exhaust gas flow, of the NOx reduction catalyst made of the lean NOx catalyst or the NH₃ denitration catalyst. With such an exhaust gas purification system, NOx is adsorbed by the NOx adsorbing material in a low-temperature region, and NOx released from the NOx adsorbing material is reduced by the downstream NOx reduction catalyst in a high-temperature region. Thus, it is possible to suppress discharge of NOx from a low-temperature region to a high-temperature region.

As such a NOx adsorbing material, JP-A-2000-230414 names one, in which alumina carries Pt, and describes that this NOx adsorbing material adsorbs NOx until the temperature reaches approximately 230°C. Japanese Patent Application Publication No. 2007-160168 (JP-A-2007-160168) describes a NOx adsorbing material that is made of zeolite that is caused to carry at least one of Fe, Cu and Co through an ion exchange process. Japanese Patent Application Publication No. 2001-198455 (JP-A-2001-198455) describes a NOx adsorbing material made of oxide of at least one of Co, Fe and Ni and describes that the NOx adsorbing material adsorbs NOx in a low-temperature region of equal to or below 40°C.

Japanese Patent Application Publication No. 2002-336700 (JP-A-2002-336700) describes that a catalyst, in which ceria carries noble metal and NOx storage material, has an excellent capability of adsorbing SOx and stores and reduces NOx.

### SUMMARY OF THE INVENTION

The invention increases the amount of NOx and SOx stored in a NOx storage catalyst in a low-temperature region.

A NOx storage catalyst of the invention includes a carrier base and a catalytic coat layer formed on the carrier base, wherein an oxide carrier, which is a component of the catalytic coat layer, contains a ceria-based oxide, the oxide carrier contains 30 mass% or more of CeO₂, and the catalytic coat layer carries 0.3 mol or more of kalium per liter of the carrier base.

The oxide carrier may contain 60 mass% or more of CeO₂. The catalytic coat layer may carry 0.5 mol or more and 1.5 mol or less of kalium per liter of the carrier base.

According to the NOx storage catalyst of the invention, the amount of each of ceria-based oxide and kalium contained is equal to or greater than a predetermined amount, so that a synergistic effect of these components is exhibited and the amount of NOx stored in a low-temperature region of equal to or below 250°C is large. Thus, it is possible to reduce the amount of NOx discharged in a low-temperature region.

When the NOx storage"reduction catalyst is disposed downstream, with respect to exhaust gas flow, of the NOx storage catalyst of the invention, NOx is adsorbed by the NOx storage catalyst and discharge thereof is therefore suppressed until noble ' metal, such as Pt, carried by the NOx storage-reduction catalyst is activated, and after the noble metal is activated, NOx released from the NOx storage catalyst is adsorbed by the NOx storage-reduction catalyst. Thus, it becomes possible to suppress discharge of NOx from a low-temperature region to a high-temperature region.

In addition, with the NOx storage catalyst of the invention, it becomes possible to adsorb a greater amount of SOx from a low-temperature region to a high-temperature region. Thus, it is possible to suppress sulfur poisoning of the NOx storage-reduction catalyst disposed downstream, with respect to exhaust gas flow, of the NOx storage catalyst, and it becomes possible to keep the high performance in purifying NOx by the NOx storage-reduction catalyst for a long time.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is an explanatory diagram showing a configuration of an exhaust gas purification system using a NOx storage catalyst of an embodiment of the invention;
FIG. 2 is a graph showing the relation between inflow gas temperature and the amount of NOx stored;
FIG 3 is a graph showing the relation between inflow gas temperature and the amount of SOx stored;
FIG. 4 is a graph showing the relation between inflow gas temperature and the amount of NOx stored;
FIG. 5 is a graph showing the relation between inflow gas temperature and the amount of SOx stored;
FIG. 6 is a graph showing the relation between inflow gas temperature and the amount of NOx stored; and
FIG. 7 is a graph showing the relation between inflow gas temperature and the amount of SOx stored.

### DETAILED DESCRIPTION OF EMBODIMENTS

NOx storage catalyst of the invention includes a carrier base and a catalytic coat layer. A monolithic base formed of a heat-resistant ceramic, such as cordierite or SiC, or a metallic base formed of metal foil can be used as the carrier base. The shape may be a honeycomb shape, a foam shape, or a pellet shape, for example. It is preferable that a honeycomb shape be used.

The catalytic coat layer includes: an oxide carrier that contains at least a ceria-based oxide; and a catalytic component that is carried by the oxide carrier and includes at least kalium. Ceria, ceria-zirconia mixed oxide, or ceria-zirconia-alumina mixed oxide, for example, may be used as the ceria-based oxide. Thus, the oxide carrier that is a component of the catalytic coat layer contains CeO₂ that originates zoom coria-based oxide.

In the invention, when ceria is used as the oxide carrier, the oxide carrier is made so as to contain 30 percent by mass (hereinafter abbreviated as "mass%") or more , of ceria, When a mixed oxide is used as the ceria-based oxide, in consideration of the CeO₂ content, the mixed oxide is prepared so as to contain 30 mass% or more oft CeO₂.

When the CeO₂ content in the oxide carrier is less than 30 mass%, the amount of NOx stored in a low-tepuperatuxe region sharply drops, which is not preferable. When 60 mass% or more of CeO₂ is contained, the amount of NOx and SOx stored in a low-temperature region further increases. In the case of a honeycomb base, because in general 100 to 200 g of the catalytic coat layer is formed per liter of the carrier base, the CeO₂ content of 30 mass% or more means that 30 to 60 g of CeO₂ is contained per liter of the carrier base. The oxide carrier may be formed of ceria-based oxide alone, or may be formed by mixing a ceria-based oxide with an oxide carrier(s), other than ceria-based oxide, such as alumina, zirconia, zeolite, silica, titania, and/or rare-earth-element oxide other than ceria.

When an oxide carrier other than ceria-based oxide is mixed, alumina, which has a large specific surface area, is particularly preferable. Because tatania has a high acidity and there is a possibility that NOx and SOx are prevented from coming closer, which can result in reduction in the storage amount, it is preferable not to use titania.

The catalytic component includes at least kalium and 0.3 mol or more of kalium is carried per liter of the carrier base. When the amount of kalium carried is less than 03 mol/L, the amount of NOx stored in a low-temperature region sharply drops, which is not preferable. When 0.5 mol/L or more of kalium is contained, the amount of NOx and SOx stored in a low-temperature region further increases.

The NOx storage catalyst of the invention may further carry alkali metal such as Na, Li, and Cs, alkaline-earth metal such as Ba, Ca, and Mg, catalytic noble metal such as Pt, Rh, Pd, Ir, and A, or catalytic transition metal such as Fe as the catalytic component in addition to kalium. When such a metal is carried, the amount of NOx stored and the amount of SOx stored can increase slightly. The amount of catalytic component carried other than kalium is not particularly limited as long as the amount falls within a range in which the effect brought about by ceria-based oxide and kalium is not impaired.

The invention will be specifically described below with the use of examples, comparative examples, and experiment examples. The compositions of the catalysts of Example 1 and Comparative Examples 1 to 3 are collectively shown in Table 1.

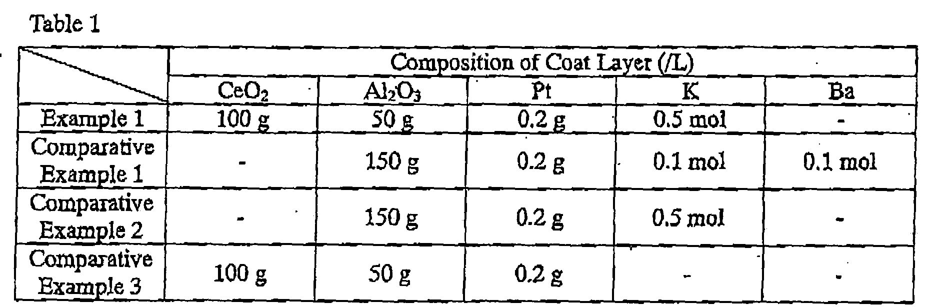

### (Example 1)

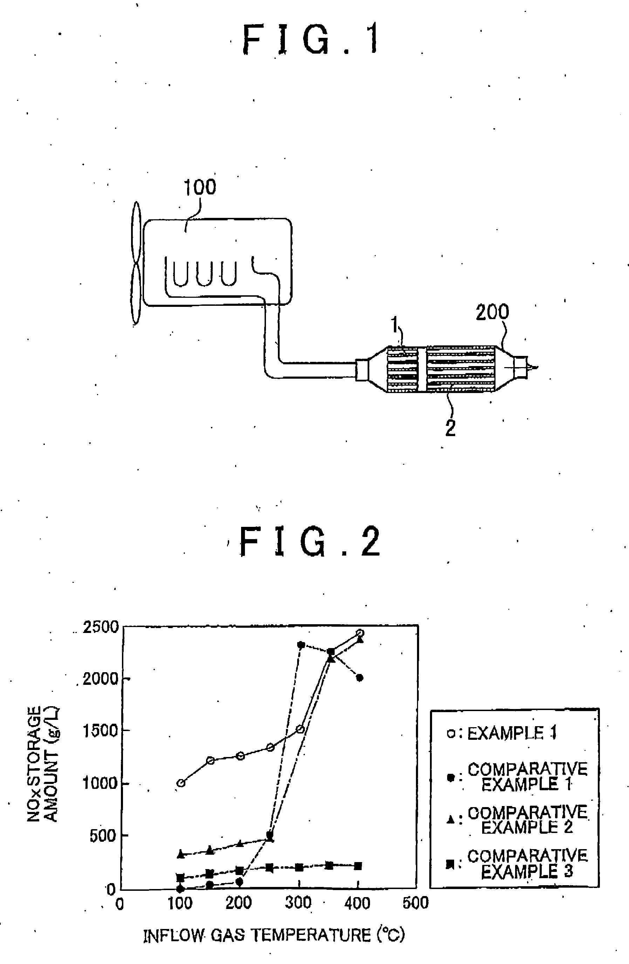

FIG. 1 shows an exhaust gas purification system equipped with the NOx storage catalyst of Example 1. The exhaust gas purification system includes an engine 100, a catalytic converter 200 placed in an exhaust system thereof, and a NOx storage catalyst 1 and a NOx storage-reduction catalyst 2 that are placed in the catalytic converter 200. The NOx storage catalyst 1 is placed on the upstream side of the NOx storage-reduction catalyst 2 with respect to exhaust gas flow.

Hereinafter, a method of manufacturing the NOx storage catalyst 1 will be described, which serves as the detailed description of the construction,

At slurry was prepared by dispersing 100 parts by mass of CeO₂ powder, 50 parts by mass of γ-Al₂O₃ powder, and 20 parts by mass of ceria sol (CeO₂; 10 mass%) as a binder in ion exchange water. The slurry was wash-coated on a honeycomb base (straight flow structure) made of cordierite with a diameter of 30 mm and a length of 50 mm and dried and burned at 500°C to form a coat layer. The amount of the coat layer formed was 150 g per liter of the honeycomb base. In the coat layer, approximately 67 mass% of CeO₂ was contained.

Subsequently, a predetermined amount of dinitro-diammine platinum solution was impregnated into the coat layer and the honeycomb base was dried and burned at 500°C to have Pt carried by the coat layer. The amount of Pt carried was 2.0 g per liter of the honeycomb base.

Then, a predetermined amount of kalium nitrate aqueous solution with a predetermined concentration was impregnated into the coat layer, and the honeycomb base was dried and burned at 500°C to have K carried by the coat layer. The amount of K carried was 0.5 mol per liter of the honeycomb base.

### (Comparative Example 1)

A catalyst equivalent to the conventional NOx storage-reduction catalyst was prepared as Comparative Example 1. A honeycomb base similar to that of Example 1 was used and a slurry containing no CeO₂ powder but containing 150 parts by mass of γ-Al₂O₃ powder was used to form a coat layer in a way similar to that of Example 1. The amount of the coat layer formed was 150 g per liter of the honeycomb base.

Subsequently, a predetermined amount of dimtro-diammme platinum solution was impregnated into the coat layer and the honeycomb base was dried and burned at 500°C to have Pt carried by the coat layer. The amount of Pt carried wars 2.0 g per liter of the carrier base.

Then, a predetermined amount of a mixed aqueous solution of kalium nitrate and barium nitrate with a predetermined concentration was impregnated into the coat layer, and the honeycomb base was dried and burned at 500°C to have Ba and K carried by the coat layer. The amount of each of Ba and K carried was 0.1 mol per liter of the honeycomb base.

### (Comparative Example 2)

A catalyst that does not contain ceria in the catalytic coat layer was prepared as Comparative Example 2. A honeycomb base similar to that of Example 1 was used and a slurry containing no CeO₂ powder but containing 150 parts by mass of γ-Al₂O₃ powder was used to form a coat layer in a way similar to that of Example 1, The amount of the coat layer formed was 150 g per liter of the honeycomb base.

Subsequently, a predetermined amount of dinitro-diammine platinum solution was impregnated into the coat layer and the honeycomb base was dried and burned at 500°C to have Pt carried by the coat layer. The amount of Pt carried was 2.0 g per liter of the honeycomb base.

Then, a predetermined amount of kalium nitrate aqueous solution with a predetermined concentration was impregnated into the coat layer, and the honeycomb base was dried and burned at 500°C to have K carried by the coat layer. The amount of K carried was 0.5 mol per liter of the honeycomb base.

### (Comparative Example 3)

A catalyst in which K was not carried by a catalytic coat layer was prepared as Comparative Example 3. A honeycomb base similar to that of Example 1 was used and a slurry similar to that of Example 1 was used to form the coat layer in a way similar to that of Example 1. The amount of the coat layer formed was 150 g per liter of the honeycomb base.

Subsequently, a predetermined amount of dinitro-diammine platinum solution was impregnated into the coat layer and the honeycomb base was dried and burned at 500°C to have Pt carried by the coat layer. The amount of Pt carried was 2.0 g per liter of the honeycomb base.

### (Experiment Example 1)

The above-described NOx storage catalysts were heat-treated at 750°C for 5 hours. Each of the heat-treated catalysts was set in an evaluation unit, the model gas of a lean exhaust gas shown in Table 2 was passed through the catalyst at a flow rate of 15 L/min at various temperatures, and the amount of NOx stored in a steady state was measured. The temperatures of the gas that flowed into the catalyst were seven levels of 100°C, 150°C, 200°C, 250°C, 300°C, 350°C, and 400°C, and the amount of NOx stored for each of these cases was measured. The result is shown in FIG. 2.

**Table 2**

| | NOx (ppm) | C₃H₆ (ppm) | O₂ (%) | CO₂ (%) | H₂O (%) | N₂ |
|---|---|---|---|---|---|---|
| Lean Gas | 200 | 500 | 10 | 10 | 5 | Remaining Parts |

### (Experiment Example 2)

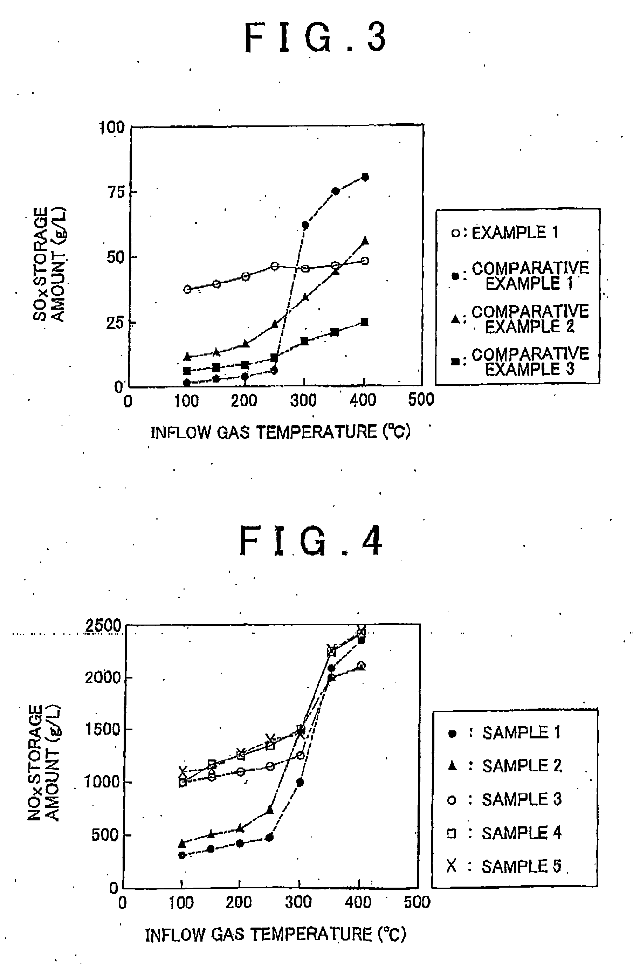

The above-described NOx storage catalysts were heat-treated at 750°C for 5 hours. Each of the heat-treated catalysts was set in an evaluation unit, the model gas of a lean exhaust gas shown in Table 3 was passed through the catalyst at a flow rate of 30 L/min at various temperatures similar to those of Experiment Example 1, and the amount of SOx stored in a steady state was measured. The result is shown in FIG. 3.

**Table 3**

| | SO₂ (ppm) | NO (ppm) | C₃H₆ (ppm) | O₂ (%) | CO₂ (%) | H₂O (%) | N₂ |
|---|---|---|---|---|---|---|---|
| Lean Gas | 100 | 200 | 200 | 10 | 10 | 5 | Remaining Parts |

### (Evaluation)

It is clear from FIGS. 2 and 3 that the catalyst of Example 1 is far better than the catalysts of Comparative Examples 1 to 3 in the performance of storing NOx and SOx in a low-temperature region of equal to or below 250°C,

When Comparative Examples 1 to 3 are compared with each other, it can be seen that the amount of NOx and SOx stored in a low-tempezature region is slightly larger in the cases of the catalysts of Comparative Examples 2 and 3 than in the case of the catalyst of Comparative Example 1. It can be considered that this is because the catalytic coat layer contained a predetermined amount or more of CeO₂ and a predetermined amount or more of K was carried in the catalytic coat layer.

Although the catalyst of Comparative Example 2 carries the same amount of K as that in the catalyst of Example 1, the amount of NOx and SOx stored by the catalyst of Comparative Example 2 in a low-temperature region is small. Meanwhile, although the catalyst of Comparative Example 3 has the catalytic coat layer that contains the same amount of CeO₂ as that in the catalyst of Example 1, the amount of NOx and SOx stored by the catalyst of Comparative Example 3 in a low-temperature region is small.

Thus, it is clear that the particular effect, brought about by the catalyst of Example1, of the significant increase in the amount of NOx and SOx stored in a low-temperature region is attributable to a synergistic effect brought about because CeO₂ and K are both contained.

### (Experiment Example 2)

Variation, in the amount of NOx and SOx stored when the amount of CeO₂ in the catalytic coat layer was varied was investigated.

A carrier base similar to that of Example 1 was used and a slurry similar to that of Example 1, except that the mixing ratio (weight ratio) between CeO₂ powder and γ-Al₂O₃ powder was varied as shown in Table 4, was used to form 150. g/L of a coat layer.

**Table 4**

| Sample No. | 1 | 2 | 3 | 4 | 5 |
|---|---|---|---|---|---|
| CeO₂ | 0 | 30 | 50 | 100 | 150 |
| Al₂O₃ | 150 | 120 | 100 | 50 | 0 |

Then, the catalysts were prepared by having 2.0 g/L of Pt carried and having 0.5 mol/L of K carried as in the case of Example 1. The catalyst according to Sample 1 is equivalent to the catalyst of Comparative Example 2 described above. The catalyst according to Sample 3 is equivalent to the catalyst of Example 1 described above.

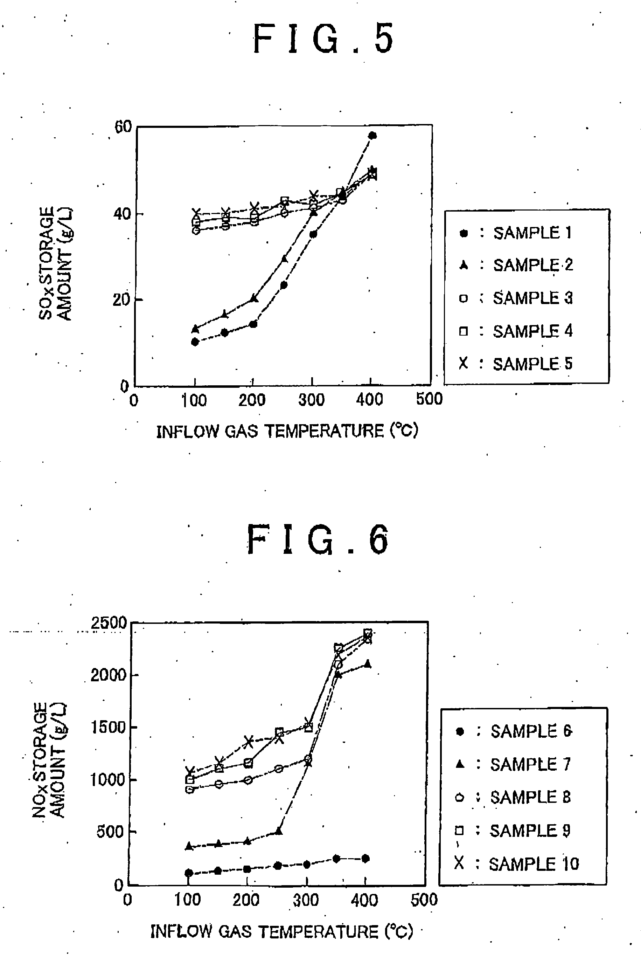

Heat treatment was conducted for each of the catalysts in a way similar to that of Experiment Example 1. Then, the amount of NOx and SOx stored was measured for each of the catalysts after the heat treatment in a way similar to that of Experiment Example 1. The results are shown in FIGS. 4 and 5.

It is clear from FIGS. 4 and 5 that with regard to the performance of storing NOx and SOx in a low-temperature region of equal to or below 250°C, the catalysts of Samples 3 to 5 are particularly excellent and that the amount of CeO₂ contained In the catalytic coat layer has to be equal to or greater than 30 mass% in the oxide carrier.

### (Experiment Example 3)

Variation in the amount of NOx and SOx stored as the amount of K carried by the catalytic coat layer was varied as shown in Table 5, was investigated.

A carrier base similar to that of Example 1 was used and a coat layer was formed as in the case of Example 1. The coat layer contained 100 g/L of CeO₂, that is, approximately 67 mass% of CeO₂ in the oxide carrier.

In a way similar to that of Example 1, the coat layer was caused to carry 2.0 g/L of Pt. Then, kalium nitrate aqueous solutions with various concentrations were prepared and a predetermined amount of each of the kalium nitrate aqueous solutions was impregnated into the coat layer to obtain the catalysts of Samples 6 to 10 with different amounts of K canted. The catalyst according to Sample 6 is equivalent to the catalyst of Comparative Example 3 described above. The catalyst according to Sample 9 is equivalent to the catalyst of Example 1 described above.

**Table 5**

| Sample No. | 6 | 7 | 8 | 9 | 10 |
|---|---|---|---|---|---|
| Amount of K Carried (mol/L) | 0 | 0.1 | 0.3 | 0.5 | 0.7 |

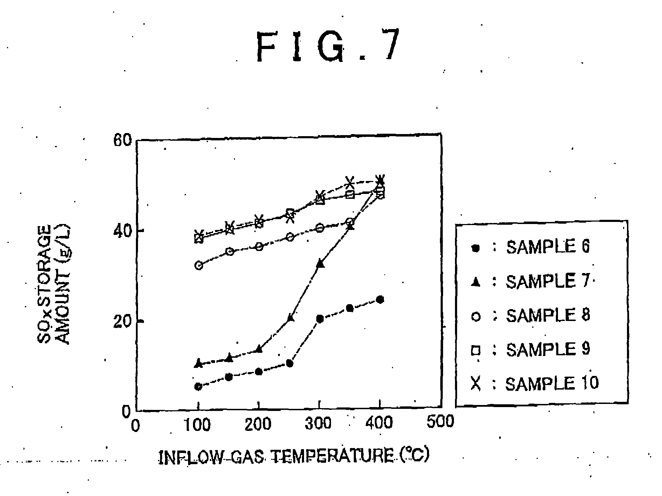

Heat treatment was conducted for each of the catalysts in a way similar to that of Experiment Example 1. Then, the amount of NOx and SOx stored was measured for each of the catalysts after the heat treatment in a way similar to that of Experiment Example 1. The results are shown in FIGS. 6 and 7.

It is clear from FIGS. 6 and 7 that with regard to the performance of storing NOx and SOx in a low-temperature region of equal to or below 250°C, the catalysts of Samples 8 to 10 are particularly excellent and that the amount of K carried in the catalytic coat layer has to be equal to or greater than 0.3 mol/L

While the NOx storage catalyst of the invention may be used alone, it is preferable that the NOx storage catalyst be used in a state where the NOx storage catalyst is placed on the upstream side of the NOx storage-reduction catalyst with respect to exhaust gas flow.

While the invention has been described with reference to example embodiments thereof, it is to be understood that the invention is not limited to the described embodiments or constructions. To the contrary, the invention is intended to cover various modifications and equivalent arrangements. In addition, while the various elements of the example embodiments are shown in various combinations and configurations, other combinations and configurations, including more, less or only a single element, are also within the spirit and scope of the invention.

## Claims

1. A NOx storage catalyst including a carrier base and a catalytic coat layer formed on the carrier base, the NOx storage catalyst being **characterized in that**:
an oxide carrier, which is a component of the catalytic coat layer, contains a ceria-based oxide;
the oxide carrier contains 30 mass% or more of CeO₂; and
the catalytic coat layer carries 0.3 mol or more of kalium per liter of the carrier base.

2. The NOx storage catalyst according to claim 1, wherein the oxide carrier, which is a component of the catalytic coat layer, contains 60 mass% or more and 100 mass% or less of CeO₂.

3. The NOx storage catalyst according to claim 1 or 2, wherein the catalytic coat layer carries 0.5 mol or more and 1.5 mol or less of kalium per liter of the carrier base.

4. The NOx storage catalyst according to any one of claims 1 to 3, wherein the catalytic coat layer carries catalytic noble metal.
